# EUROPÄISCHE PATENTSCHRIFT

(11) **EP 2 276 949 B1**
(45) Veröffentlichungstag und Bekanntmachung des Hinweises auf die Patenterteilung: **01.01.2014**
(21) Anmeldenummer: 08759695.3
(22) Anmeldetag: 16.05.2008
(51) Int. Cl.: F16J 15/02, F16J 15/06, G08B 25/00

(54) **ABDICHTUNG EINER MECHANISCHEN VERBINDUNG MIT EINEM BISTABILEN DICHTUNGSELEMENT**
SEALING A MECHANICAL CONNECTION BY WAY OF A BISTABLE SEALING ELEMENT
ÉTANCHÉITÉ D'UNE JONCTION MÉCANIQUE ASSURÉE AU MOYEN D'UN ÉLÉMENT D'ÉTANCHÉITÉ BISTABLE

(43) Veröffentlichungstag der Anmeldung: 26.01.2011
(73) Patentinhaber: Siemens Aktiengesellschaft, 80333 München (DE)
(72) Erfinder: GRUSZENINKS, Johann, 6340 Baar (CH); LANGE, René, 8634 Hombrechtikon (CH)
(86) Internationale Anmeldenummer: PCT/EP2008/056059
(87) Internationale Veröffentlichungsnummer: WO 2009/138129

(56) Entgegenhaltungen:
- EP-A- 0 362 067
- WO-A-2004/081423
- DE-A1- 19 733 375
- GB-A- 1 349 434
- US-A1- 2007 169 953

## Beschreibung

Die vorliegende Erfindung betrifft das technische Gebiet der Verbindungstechnik, mit der zwei unterschiedliche Module mechanisch lösbar miteinander verbunden werden können. Die vorliegende Erfindung betrifft insbesondere ein Modul für ein Verbindungssystem, wobei das Modul ein Dichtelement aufweist, so dass eine mechanische Verbindung zwischen dem Modul und einem weiteren Modul gegenüber nachteiligen Umwelteinflüssen geschützt werden kann. Die vorliegende Erfindung betrifft ferner ein Verbindungssystem, welches das genannte Modul und das weitere Modul aufweist, sowie ein Verfahren zum Abdichten eines Verbindungssystems. Ferner betrifft die vorliegende Erfindung eine Peripherieeinheit, welche ein Verbindungssystem des beschriebenen Typs aufweist. Außerdem betrifft die vorliegende Erfindung ein Gebäudemanagementsystem, welches eine Zentrale und zumindest eine Peripherieeinheit des genannten Typs aufweist.

Um ein unerwünschtes Auftreten einer Gefahrensituation wie beispielsweise die Entstehung eines Brandes frühzeitig zu erkennen, werden häufig Gefahrmelder verwendet, die in einem gefahrenüberwachten Bereich beispielsweise innerhalb eines Gebäudes an geeigneten Stellen angebracht werden. Ein Gefahrmelder kann auch ein Teil eines Gefahrmeldesystems oder eines umfassenden Gebäudemanagementsystems sein, welches neben einer Zentrale mehrere Peripherieeinheiten aufweist. Die Peripherieeinheiten können mit der Zentrale über eine direkte oder eine indirekte Kommunikationsverbindung verbunden sein.

Die Peripherieeinheiten können verschiedenen Funktionen wie beispielsweise die Detektion von Rauch oder gefährlichen Gasen, das Ausgeben von optischen oder akustischen Alarmmeldungen und/oder das Annehmen von manuellen Notrufmeldungen ausüben.

Um die Wartung und/oder die Montage von Peripherieeinheiten zu vereinfachen, ist es ferner bekannt, die Peripherieeinheiten mit einem sogenannten Sockel zu versehen. Der Sockel dient als Befestigungsmodul, welches fest an der gewünschten Stelle eines zu überwachenden Raumes angebracht werden kann. Ein Peripheriemodul, welches die entsprechende Funktionalität der Peripherieeinheit bereitstellt, kann dann mittels einer einfachen Steckverbindung in den Sockel eingebracht werden. Im Falle einer Wartung oder einer genauen Überprüfung der Funktionsfähigkeit eines Peripheriemoduls kann dieses auf einfache Weise von dem jeweiligen Sockel abgenommen werden.

Es ist ferner bekannt die Verbindung zwischen dem Peripheriemodul und einem als Befestigungsmodul dienenden Sockel mittels einer Dichtung vor dem Eindringen von Staub, Feuchtigkeit und/oder Wasser zu schützen. Feuchtigkeit kann nämlich auch bei ansonsten hinsichtlich der Kondensation von Feuchtigkeit unkritischen Räumen beispielsweise dadurch entstehen, dass lokal am Ausgang eines Verbindungsrohres zwischen zwei Räumen mit einer stark unterschiedlichen Raumtemperatur, Luftfeuchtigkeit kondensiert. Da Gefahrmelder bzw. Peripherieeinheiten eines Gefahrmeldesystems häufig in der Nähe des Ausgangs eines derartigen Verbindungsrohres angebracht werden, kann unerwünscht in das Innere eines Peripherie- oder Gefahrmeldemoduls eindringendes Kondenswasser eine erhebliche Gefahr für die Betriebssicherheit der jeweiligen Peripherie- bzw. Gefahrmeldeeinheit darstellen. Auch können Luftströmungen am Ausgang eines Verbindungsrohres insbesondere bei Rauchmeldern eine zuverlässige Detektierung einer Gefahrensituation verhindern.

Herkömmliche Dichtungen behindern jedoch häufig die Montage eines Peripheriemoduls an und/oder die Demontage des Peripheriemoduls von dem Befestigungsmodul. Die Behinderung wird dabei insbesondere durch eine unerwünschte mechanische Reibung zwischen der Dichtung auf der einen Seite und zumindest einem der beiden Module auf der anderen Seite hervoraerufen. Dabei ist der Grad der Behinderung umso größer, je höher die Anforderungen an die Dichtigkeit sind.

Ein Beispiel von herkömmlichen Dichtungen ist von US 2007/0169953 A1 offenbart. Der Erfindung liegt die Aufgabe zugrunde, die Abdichtung eines mechanischen Verbindungssystems insbesondere zwischen einem Befestigungsmodul und einem Peripheriemodul eines Gefahrmelders dahingehend zu verbessern, dass einerseits eine hohe Dichtigkeit gewährleistet und andererseits eine einfache Montage und/oder Demontage des Verbindungssystems möglich ist.

Diese Aufgabe wird gelöst durch die Gegenstände der unabhängigen Patentansprüche. Vorteilhafte Ausführungsformen der vorliegenden Erfindung sind in den abhängigen Ansprüchen beschrieben.

Gemäß einem ersten Aspekt der Erfindung wird ein Sockel für ein Verbindungssystem beschrieben. Der beschriebene Sockel weist auf (a) ein Chassis und (b) ein Dichtelement, welches an dem Chassis angebracht ist und welches zum Abdichten eines Zwischenraums zwischen dem Sockel und einem Peripheriemodul des Verbindungssystems eingerichtet ist. Erfindungsgemäß ist das Dichtelement ein bistabiles Dichtelement, welches eine erste räumliche Konfiguration und eine zweite räumliche Konfiguration annehmen kann, welche von der ersten räumlichen Konfiguration verschieden ist.

Dem beschriebenen Sockel liegt die Erkenntnis zugrunde, dass durch die Verwendung eines bistabilen Dichtelements der Sockel und das Peripheriemodul eines Verbindungssystems sowohl auf einfache Weise miteinander verbunden oder voneinander gelöst werden können als auch insbesondere im verbundenen Zustand die beiden Teile gegeneinander abgedichtet werden können.

Bei dem Verbindungssystem handelt es sich um ein mechanisches Verbindungssystem. Dies bedeutet jedoch nicht, dass insbesondere innerhalb des durch das Dichtelement abgedichteten Zwischenbereichs zwischen dem Sockel und dem Peripheriemodul nicht auch noch anderen Verbindungen zwischen den beiden Teilen ausgebildet sein können. Eine derartige Verbindung kann beispielsweise eine elektrische, eine magnetische, eine elektromagnetische, eine optische und/oder eine pneumatische Kopplung umfassen.

Gemäß einem Ausführungsbeispiel der Erfindung ist das Dichtelement derart ausgebildet, dass es in der ersten räumlichen Konfiguration einen räumlichen Verbindungsbereich freigibt, so dass das Peripheriemodul ohne Behinderung durch das Dichtelement mit dem Sockel verbindbar und/oder von dem Sockel lösbar ist. Die beschriebene Freigabe des räumlichen Verbindungsbereiches kann bedeuten, dass in der ersten räumlichen Konfiguration alle Abschnitte des Dichtelements, die ein Verbinden des Sockels mit dem Peripheriemodul behindern könnten, aus dem räumlichen Verbindungsbereich entfernt sind.

Gemäß einem weiteren Ausführungsbeispiel der Erfindung ist das Dichtelement derart ausgebildet, dass es in der zweiten räumlichen Konfiguration den Zwischenraum zwischen dem Sockel und dem Peripheriemodul abdichtet. Das Abdichten kann dabei derart erfolgen, dass zumindest ein Teil des Dichtelements von außen oder von innen an jeweils einem Randbereich (a) des Chassis des Sockels und (b) eines weiteren Chassis des Peripheriemoduls anliegt. Das Anliegen kann dabei unter einer gewissen Vorspannung erfolgen, so dass eine hohe Dichtigkeit erreicht werden kann.

Abhängig von den jeweiligen Anforderungen, die an das Verbindungssystem gestellt werden, wenn der Sockel und das Peripheriemodul miteinander verbunden sind, kann durch das Dichtelement beispielsweise ein unerwünschtes Eindringen von Feststoffen, Flüssigkeiten und/oder Gasen verhindert werden. Dabei können verschiedene Dichtigkeitsgrade erreicht werden, so dass beispielsweise ein Eindringen von Staub, Spitzwasser und/oder Luftfeuchtigkeit zuverlässig verhindert werden kann. Das mechanische Verbindungssystem kann beispielsweise die im Bereich der Gebäudesicherheit bzw. der Gefahrmeldetechnik für raue Umweltbedingungen geforderte Schutzart IP 3 erfüllen. Mit IP 3 wird in diesem Zusammenhang ein Schutz gegen Sprühwasser beschrieben, welches unter einem schrägen Winkel von bis zu 60° auf das Dichtelement bzw. auf die durch das Dichtelement abgedichteten Oberfläche der Steckverbindung aufgesprüht wird.

Im Zusammenhang mit der in dem Dichtelement durch eine mechanische Spannung gespeicherte Energie wird noch auf Folgendes hingewiesen: Wenn das Dichtelement in der zweiten räumlichen Konfiguration mit einer nicht vernachlässigbaren Vorspannung an dem Peripheriemodul anliegt, dann fällt die zweite räumliche Konfiguration des Dichtelements zumindest nicht exakt mit einem Minimum der Energie- bzw. Spannungskurve des bistabilen Dichtelements zusammen. Dies kann bedeuten, dass das Dichtelement durch die Anwesenheit des Peripheriemoduls davon abgehalten wird, exakt in den zweiten räumlichen Konfigurationszustand überzugehen.

Gemäß einem Ausführungsbeispiel ist das Verbindungssystem ein Stecksystem, bei dem der Sockel und das Peripheriemodul mittels einer Steckverbindung miteinander verbindbar sind. Die Steckverbindung kann dabei durch ein einfaches ineinander oder gegeneinander Schieben der beiden Teile hergestellt werden.

Es wird jedoch darauf hingewiesen, dass das Verbindungssystem auch eine Schraubverbindung aufweisen kann, bei dem die beiden Teile durch eine geeignete Schraubbewegung miteinander verbunden werden können. In diesem Fall weist eines der beiden Teile zumindest ein Element mit einem Außen-Schraubgewinde auf. In entsprechender Weise weist das andere der beiden Teile ein Element mit einem Innen-Schraubgewinde auf.

Gemäß einem weiteren Ausführungsbeispiel weist das Stecksystem zusätzlich eine mechanische Sicherung gegen ein ungewolltes Lösen des Peripheriemoduls von dem Sockel auf.

Die mechanische Sicherung kann auf besonders einfache und effiziente Weise durch einen sog. Bajonettverschluss realisiert werden. Bei einem entsprechenden Vorgang des sicheren Verbindens werden dabei zunächst die beiden Teile gegeneinander geschoben und dann um bevorzugt einen vorgegebenen Winkel gegeneinander verdreht. Bei dem Vorgang des Lösens der sicheren Verbindung werden die beiden Teile zunächst um den vorgegebenen Winkel in Gegenrichtung verdreht und dann räumlich voneinander separiert. Die typischerweise manuelle Handhabung dieser beiden Vorgänge wird bei dem in dieser Anmeldung beschriebenen Verbindungssystem dadurch erheblich erleichtert, dass das Dichtelement in die erste räumliche Konfiguration überführbar ist, so dass sowohl die Steckbewegung als auch die Verdrehbewegung zwischen den beiden Teilen von dem Dichtelement nicht behindert wird.

Gemäß einem weiteren Ausführungsbeispiel weist der Sockel zusätzlich einen elektrischen Anschluss auf, welcher derart ausgebildet ist, dass er mit einem weiteren elektrischen Anschluss des Peripheriemoduls verbunden ist, wenn der Sockel und das Peripheriemodul miteinander verbunden sind.

Die zusätzliche Ausbildung eines elektrischen Anschlusses hat den Vorteil, dass neben einer mechanischen Verbindung zwischen beiden Teilen auch noch eine elektrische Verbindung herstellbar ist. Somit können elektrische Einrichtungen, die beispielsweise in oder an dem Peripheriemodul abgebracht sind, durch einen Anschluss des Sockels an ein elektrisches Leitungssystem mit elektrischer Energie versorgt werden. Das Gleiche gilt auch für eine mögliche drahtgebundene Kommunikation zwischen einer Kommunikationseinheit des Peripheriemoduls, wobei die Kommunikationsleitung über bzw. durch das Befestigungsmodul verläuft.

Gemäß der Erfindung weist das Dichtelement ein elastisches Material auf. Das elastische Material kann beispielsweise ein natürlicher Gummi wie beispielsweise ein Kautschuk und/oder ein synthetischer Gummi sein, so dass das Dichtelement ohne größere Verschleißerscheinungen nahezu beliebig oft von der einen räumlichen Konfiguration in die andere räumliche Konfiguration überführt werden kann. Das elastische Material kann somit auch als gummielastisches Material bezeichnet werden.

Das elastische Material kann auch einen geeigneten Kunststoff oder einen mit Metall verstärkten Kunststoff aufweisen. Dabei kann das Metall beispielsweise in Form eines Geflechts und/oder eines Gewebes ausgebildet sein.

Die Verwendung eines elastischen Materials hat zudem den Vorteil, dass das Dichtelement auch bei einer unglatten Oberfläche des Sockels und/oder des Peripheriemoduls gut an den entsprechenden Oberflächen anliegen kann und somit eine hohe Dichtigkeit gewährleisten kann.

Gemäß der Erfindung ist das Dichtelement derart ausgebildet, dass es mittels eines Umstülpvorgangs von der ersten räumlichen Konfiguration in die zweite räumliche Konfiguration überführt werden kann.

Bei dem beschriebenen Umstülpvorgang wird bevorzugt lediglich ein Teil des Dichtelements umgestülpt. In diesem Zusammenhang kann unter Umstülpen verstanden werden, dass eine zunächst innere Wandung des Dichtelements nach außen umgelegt wird.

Bei einem Zusammenfügen der beiden Teile kann somit das Dichtelement, sofern noch nicht geschehen, zunächst in den ersten räumlichen Konfigurationszustand bzw. die erste räumliche Konfiguration gebracht werden. Dies erfolgt dann durch das Umstülpen von zumindest einem Teil des Dichtelements. In dem umgestülpten Zustand steht dann für das Zusammenfügen der beiden Teile zueinander genügend Platz zur Verfügung, so dass eine Behinderung insbesondere infolge von Reibung an dem Dichtelement zumindest bei einer einigermaßen kontrollierten Handhabung nicht zu besorgen ist. Nach dem Zusammenfügen der beiden Teile, welches auch ein mechanisches Sichern umfassen kann, wird das Dichtelement dann durch einen Umstülpvorgang in entgegen gesetzter Richtung in den zweiten räumlichen Konfigurationszustand versetzt. In diesem Zustand wird dann die eigentliche Dichtwirkung des Dichtelements, nämlich das Abdichten des Zwischenraums zwischen dem Sockel und dem Peripheriemodul erzielt.

Das Überführen des Dichtelements zwischen den beiden verschiedenen räumlichen Konfigurationen kann insbesondere durch einen manuellen Handhabungseingriff erfolgen.

Gemäß einem weiteren Ausführungsbeispiel der Erfindung weist das Dichtelement in einer Draufsicht eine runde Form auf. In diesem Zusammenhang bedeutet der Begriff "runde Form", dass das Dichtelement zumindest in der Draufsicht keine Ecken aufweist. Die Form kann dabei oval oder auch kreisrund sein. Im Falle einer kreisrunden Form kann das Dichtelement eine zylindersymmetrische bzw. eine rotationssymmetrische Form aufweisen.

Eine ovale oder eine kreisförmige Form des Dichtelements hat den Vorteil, dass der oben beschriebene Umstülpvorgang auf besonders Material schonende Art und Weise durchgeführt werden kann. Im Falle eines eckigen Dichtelements würde nämlich insbesondere an den Ecken eine mechanisch sehr hohe Spannung auftreten, welche beispielsweise dann, wenn das Material des Dichtelements bereits etwas gealtert und somit nicht mehr ganz so elastisch ist, zu einem Einreisen des Dichtelements führen kann.

Gemäß einem weiteren Ausführungsbeispiel der Erfindung weist das Dichtelement eine Dichtlippe auf, welche in der zweiten räumlichen Konfiguration an einer Außenwand des Peripheriemoduls anliegt.

Das beschriebene Anliegen des Dichtelements an der Außenwand des Peripheriemoduls hat den Vorteil, dass alle Stoffe, die von außen in das Verbindungssystem eindringen würden, dazu beitragen, dass die Dichtlippe noch fester an da die Außenwand gedrückt wird. Auf diese Weise kann auch für unter einem hohen Druck stehende Flüssigkeiten oder Gase eine hohe Dichtigkeit gewährleistet werden.

Gemäß einem weiteren Aspekt wird ein Verbindungssystem beschrieben. Das beschriebene Verbindungssystem weist auf (a) einen Sockel und (b) ein Peripheriemodul. Die beiden Teile sind derart ausgebildet, dass sie lösbar miteinander verbindbar sind.

Auch dem beschriebenen Verbindungssystem liegt die Erkenntnis zugrunde, dass in der ersten räumlichen Konfiguration des bistabilen Dichtelements der Sockel und das Peripheriemodul auf einfache Weise miteinander verbunden oder voneinander gelöst werden können. In der zweiten räumlichen Konfiguration des bistabilen Dichtelements werden die beiden Teile insbesondere im verbundenen Zustand zuverlässig gegeneinander abgedichtet. Auf diese Weise kenn ein ungewolltes Eindringen von Staub, Flüssigkeiten oder Gasen in den Innenraum des Sockels und/oder des Peripheriemoduls verhindert werden.

Gemäß einem weiteren Aspekt der Erfindung wird eine Peripherieeinheit für ein Gefahrmeldesystem beschrieben.

Der beschriebenen Peripherieeinheit liegt die Erkenntnis zugrunde, dass das oben beschriebene Verbindungssystem auf besonders vorteilhafte Weise für Peripherieeinheiten eines Gebäudemanagementsystems verwendet werden kann. Das Gebäudemanagementsystem ist ein sog. Gefahrmeldesystem.

Die Peripherieeinheit bzw. das Peripheriemodul kann abhängig von den jeweiligen Anforderungen unterschiedliche Aufgaben im Rahmen eines Gebäudemanagements wahrnehmen. So kann das Peripheriemodul beispielsweise Rauch erkennen und somit auf einen Brand hinweisen. Dabei kann das Peripheriemodul einen auf dem optischen Streulichtprinzip beruhenden Rauchlichtmelder und/oder einen sog. linearen Rauchmelder aufweisen. In diesem Zusammenhang wird unter dem Begriff linearer Rauchmelder ein Melder verstanden, bei dem die Anwesenheit von Rauch durch die optische Extinktion der mit Rauchpartikel versehenen Luft erkannt wird.

Das Peripheriemodul kann ferner einen Gasdetektor aufweisen, mit dem beispielsweise für den Menschen giftige Gase erkannt werden können. Dazu kann auf eine Vielzahl von verschiedenen bekannten Prinzipien zur Gasdetektierung zurückgegriffen werden. Ebenso kann das Peripheriemodul einen Wärmesensor und/oder einen Bewegungsmelder aufweisen. Ein Wärmesensor kann beispielsweise zu Brandüberwachung verwendet werden. Ein Bewegungsmelder kann in bekannter Weise zur Raumüberwachung und damit zum Einbruchs- bzw. Intrusionsschutz verwendet werden.

Das Peripheriemodul kann auch lediglich der Signalisierung von Alarmmeldungen dienen. So können im Falle einer detektierten Gefahrensituation optische und/oder akustische Alarmmeldungen ausgegeben werden. Akustische Alarmmeldungen können auch konkrete Anweisungen an Personen umfassen, die sich in einem Gefahrenbereich befinden und die zum schnellst möglichen Verlassen des Gefahrenbereichs angeleitet werden sollen.

Außerdem kann das Peripheriemodul ein mechanischer Notrufschalter oder Notruftaster sein, mit dem eine Person das Eintreten einer Gefahrensituation melden kann.

Das Peripheriemodul kann auch eine beliebige Kombination der oben aufgeführten Elemente aufweisen, so dass die o. g. Funktionalitäten in einer beliebigen Kombination erfüllt werden können.

Der Sockel kann beispielsweise an einer Wand oder an der Decke eines zu überwachenden Raumes angebracht werden. Das Peripheriemodul kann dann an dem Sockel befestigt werden. Wie oben bereits erläutert, kann während des Befestigens bzw. des Anbringens des Peripheriemoduls an dem Sockel das Dichtungselement in der ersten räumlichen Konfiguration vorliegen, so dass das Dichtungselement den Befestigungsvorgang nicht behindert. Nach dem Anbringen des Peripheriemoduls an dem Befestigungsmodul kann das Dichtungselement in die zweite räumliche Konfiguration überführt werden, so dass ein Zwischenraum zwischen dem Befestigungsmodul und dem Peripheriemodul zuverlässig abgedichtet wird.

Die Abdichtung des Zwischenraums zwischen dem Sockel und dem Peripheriemodul hat den Vorteil, dass das jeweilige Peripheriemodul auch in besonders gefährdeten Räumen eingesetzt werden kann, in denen beispielsweise eine hohe Luftfeuchtigkeit, Spritzwasser, explosive Gase oder Stäube oder sonstige Stoffe vorhanden sind, die im Falle eines Eindringen in das Innere des Peripheriemoduls dessen Funktionsfähigkeit zumindest teilweise beinträchtigen können.

Die beschriebene Bistabilität des Dichtelements hat den Vorteil, dass das jeweilige Peripheriemodul, welches, wie oben beschrieben, auf viele verschiedene Weises ausgestaltet und damit verschiedene Funktionalitäten aufweisen kann, auf einfache Weise an dem Sockel angebracht und/oder von dem Sockel entfernt werden kann. Dazu ist es lediglich erforderlich, das Dichtelement in die erste räumlich Konfiguration zu überführen. Somit kann auch bei einem fest montierten Sockel das Peripheriemodul auf einfache Weise durch einen manuellen Bedieneinariff gegen ein anderes Peripheriemodul desselben oder eines anderen Typs ausgetaucht werden. Dies erleichtert insbesondere bei einem Gefahrmeldesystem Wartungsarbeiten an den einzelnen Peripherieeinheiten, da die einzelnen Peripheriemodule auf einfache Weise von den jeweiligen typischerweise fest montierten Sockeln entfernt und wieder angebracht werden können.

Gemäß einem weiteren Aspekt wird ein Gebäudemanagementsystem beschrieben. Das Gebäudemanagementsystem kann insbesondere als Gefahrmeldesystem aus gebildet sein. Das Gebäudemanagementsystem weist auf (a) eine Zentrale und (b) zumindest eine Peripherieeinheit des oben beschriebenen Typs. Die Peripherieeinheit ist mit der Zentrale über eine Kommunikationsverbindung gekoppelt.

Dem beschriebenen Gebäudemanagementsystem liegt die Erkenntnis zugrunde, dass die oben beschriebene Peripherieeinheit ggf. zusammen mit einer Vielzahl von anderen Peripherieeinheiten, welche ebenfalls mit der Zentrale gekoppelt sind, auch für ein umfassendes Gebäudemanagement verwendet werden kann. Infolge der oben bereits eingehend erläuterten einfachen Austauschbarkeit eines Peripheriemoduls gegen ein anderes Peripheriemodul lassen sich Wartungsarbeiten an dem Gebäudemanagementsystem einfach und effizient durchführen. Zum Austausch und zur Uberprüfung von zumindest vorübergehend von dem Sockel entfernten Peripheriemodulen genügt dann ein einfacher manueller Bedieneingriff.

Die Möglichkeit der einfachen und effizienten Wartung ist insbesondere bei Gefahrmeldern von großem Vorteil, welche in regelmäßigen Abständen überprüft werden müssen um eine hohe Betriebssicherheit sicher zu gewährleisten. So können beispielsweise die Batterien von batteriebetriebenen und über eine Funkverbindung mit einer Zentrale kommunizierenden Peripherieeinheiten auf einfache Weise ausgetauscht werden.

Es wird darauf hingewiesen, dass neben einer drahtlosen Funk-Kommunikationsverbindung die Peripherieeinheit selbstverständlich auch eine drahtgebundene Kommunikationsverbindung mit der Zentrale gekoppelt sein kann.

Gemäß einem weiteren Aspekt wird ein Verfahren zum Abdichten eines Verbindungssystems beschrieben. Das Verbindungssystem weist ein Modul und ein weiteres Modul auf, wobei die beiden Module derart ausgebildet sind, dass sie lösbar miteinander verbindbar sind. Das beschriebene Verfahren weist das Verwenden eines Dichtelements auf, welches an einem Chassis des Moduls angebracht ist und welches zum Abdichten eines Zwischenraums zwischen dem Modul und dem weiteren Modul eingerichtet ist. Das Dichtelement ist ein bistabiles Dichtelement, welches eine erste räumliche Konfiguration und eine zweite räumliche Konfiguration annehmen kann, welche von der ersten räumlichen Konfiguration verschieden ist.

Dem beschriebenen Abdichtungsverfahren liegt die Erkenntnis zugrunde, dass durch die Verwendung eines bistabilen Dichtelements das Modul und das weitere Modul des Verbindunassvstems sowohl auf einfache Weise miteinander verbunden oder voneinander gelöst werden können als auch insbesondere im verbundenen Zustand die beiden Module zuverlässig gegeneinander abgedichtet werden können.

Es wird darauf hingewiesen, dass Ausführungsformen der Erfindung mit Bezug auf unterschiedliche Erfindungsgegenstände beschrieben wurden. Insbesondere sind einige Ausführungsformen der Erfindung mit Vorrichtungsansprüchen und andere Ausführungsformen der Erfindung mit Verfahrensansprüchen beschrieben. Dem Fachmann wird jedoch bei der Lektüre dieser Anmeldung sofort klar werden, dass, sofern nicht explizit anders abgegeben, zusätzlich zu einer Kombination von Merkmalen, die zu einem Typ von Erfindungsgegenstand gehören, auch eine beliebige Kombination von Merkmalen möglich ist, die zu unterschiedlichen Typen von Erfindungsgegenständen gehören.

Weitere Vorteile und Merkmale der vorliegenden Erfindung ergeben sich aus der folgenden beispielhaften Beschreibung derzeit bevorzugter Ausführungsformen.
Figur 1a zeigt in einer Querschnittsdarstellung einen Alarmgeber, bei dem das Peripheriemodul und das ein bistabiles Dichtungselement aufweisendes Befestigungsmodul voneinander separiert sind.
Figur 1b zeigt in einer Querschnittsdarstellung den in Figur 1 dargestellten Alarmgeber im zusammengebauten Zustand.
Figur 2 zeigt in einer Querschnittsdarstellung einen optischen Rauchmelder, welcher ein Befestigungsmodul mit einem bistabilen Dichtungselement und ein Peripheriemodul mit einer Streukammer zum optischen Detektieren von Rauch aufweist.

An dieser Stelle wird darauf hingewiesen, dass sich in der Zeichnung die Bezugszeichen von gleichen oder von einander entsprechenden Komponenten lediglich in ihrer ersten Ziffer und/oder durch einen angehängten Buchstaben voneinander unterscheiden.

Ferner wird darauf hingewiesen, dass die nachfolgend beschriebenen Ausführungsformen lediglich eine beschränkte Auswahl an möglichen Ausführungsvarianten der Erfindung darstellen. Insbesondere ist es möglich, die Merkmale einzelner Ausführungsformen in geeigneter Weise miteinander zu kombinieren, so dass für den Fachmann mit den hier explizit dargestellten Ausführungsvarianten eine Vielzahl von verschiedenen Ausführungsformen als offensichtlich offenbart anzusehen sind.

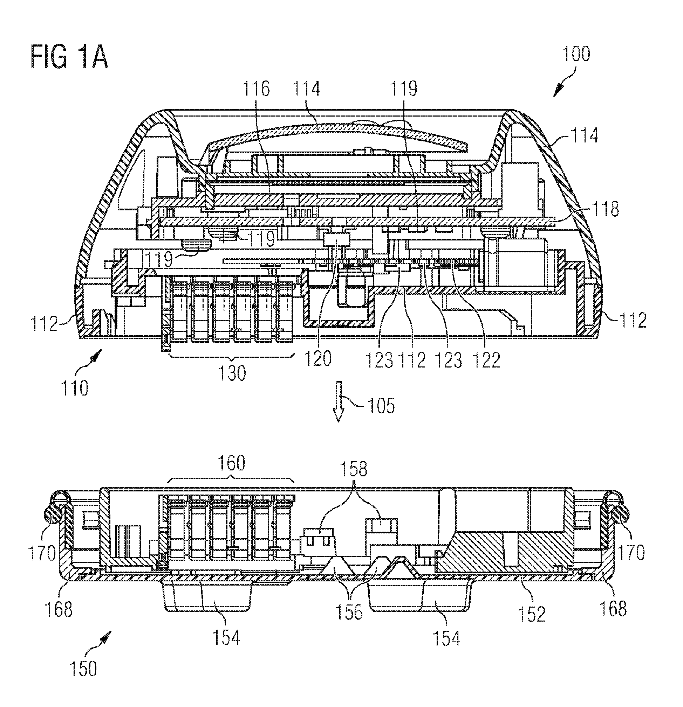

Figur 1a zeigt in einer Querschnittsdarstellung eine als Alarmgeber ausgebildete Peripherieeinheit 100. Der Alarmgeber 100 weist eine nicht dargestellte akustische Ausgabevorrichtung wie beispielsweise einen Piezolautsprecher auf. Der Alarmgeber kann somit auch als Alarm Sounder 100 bezeichnet werden.

Der Alarmgeber 100 weist ein Peripheriemodul 110 und ein Befestigungsmodul 150 auf. In dem Peripheriemodul 110 befinden sich alle Komponenten, die für eine akustische Alarmierung erforderlich sind. Es wird jedoch darauf hingewiesen, dass aus Gründen der Übersichtlichkeit in Figur 1a nicht alle diese Komponenten dargestellt sind. Das Befestigungsmodul 150, welches häufig auch als Sockel bezeichnet wird, dient der Befestigung des Alarmgebers 100 an einer Wand oder an der Decke eines gefahrenüberwachten Raumes.

Das Peripheriemodul 110 weist ein Rahmenelement 112 auf. An dem Rahmenelement 112 ist eine Haube 114 angebracht, welche zusammen mit dem Rahmenelement 112 die äußere Begrenzung bzw. Abdeckung des Peripheriemoduls 110 darstellt. An der in Figur 1a dargestellten Oberseite des Peripheriemoduls 110 weist die Haube 114 eine Öffnung auf, so dass von der akustischen Ausgabevorrichtung generierte Schallwellen nach außen dringen können.

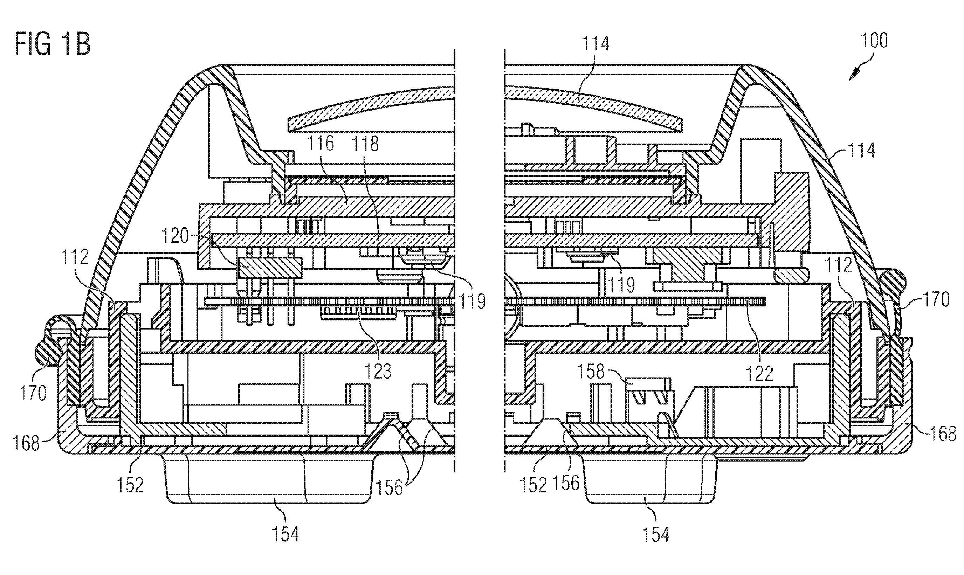

Gemäß dem hier dargestellten Ausführungsbeispiel befindet sich im Inneren des Peripheriemoduls 110 ein Trägerelement 116. An dem Trägerelement 116 sind in nicht dargestellter Weise elektronische Schaltungen zum Ansteuern der akustischen Ausgabevorrichtung sowie zum Betreiben eines ebenfalls nicht dargestellten Mikrophons angebracht. Ferner befindet sich im Inneren des Peripheriemoduls 110 eine Leiterplatte 118, an der in bekannter Weise beispielsweise mittels SMD Technik elektronische Bauelemente 119 angebracht sind. Ein Stiftkontakt 120 verbindet die Leiterplatte 118 mit einer weiteren Leiterplatte 122, an der weitere Bauelemente 123 angebracht sind. An der in Figur 1 dargestellten Unterseite des Peripheriemoduls 110 sind ferner Anschlusskontakte 130 vorgesehen. Im zusammengebauten Zustand des Alarmgebers 100 sind diese Anschlusskontakte 130 mit Anschlusskontakten 160 des Befestigungsmoduls 150 elektrisch verbunden. Auf diese Weise kann das Peripheriemodul 110 über das Befestigungsmodul 150 mit Strom versorgt werden. Ebenso können die Anschlusskontakte 130 und 160 für eine Kommunikationsverbindung zwischen dem Alarmgeber 100 und einer nicht dargestellten Zentrale eines Gebäudemanagement- bzw. Gefahrenmeldesystems verwendet werden.

Wie aus dem unteren Teil von Figur 1 ersichtlich, weist das Befestigungsmodul 150 ein Bodenelement 152 auf, an welchem Abstandshalter 154 ausgeformt sind. Die Abstandshalter 154 dienen einer sicheren Befestigung des Befestigungsmoduls 150 beispielsweise an einer Wand oder einer Decke eines Raumes. Die Befestigung kann in bekannter Weise mittels nicht dargestellter Schrauben erfolgen. Die Schrauben können dabei bevorzugt im Bereich der Abstandhalter 154 durch das Bodenelement 152 des Sockels 150 geführt werden.

An dem Bodenelement 152 sind ferner mehrere Kabeldurchlassöffnungen 156 ausgebildet. Gemäß dem hier dargestellten Ausführungsbeispiel weisen die Kabeldurchlassöffnungen 156 jeweils eine Kegelform auf. Um ein unerwünschtes Abknicken von durchgeführten Leitungen zu vermeiden, weisen die Kabeldurchlassöffnungen 156 ein elastisches Material auf.

In dem Befestigungsmodul 150 sind ferner Einrastelemente 158 vorgesehen. Diese rasten bei einem Anbringen des Peripheriemoduls 110 an dem Befestigungsmodul 150 an in Figur 1 nicht dargestellten komplementären Konturen des Peripheriemoduls 110 ein und verhindern somit ein versehentliches Separieren der beiden Module 110 und 150 voneinander.

An dem Peripheriemodul 150 ist ferner ein Dichtelement 170 angebracht. Das Dichtelement 170 umgibt das gesamte Befestigungsmodul 170 entlang einer seitlichen Außenwand des Befestigungsmoduls 170. Mittels eines Stützrings 168 ist das Dichtelement 170 an der Außenwand fixiert. Das Dichtelement 170 ist somit der äußeren Form des Peripheriemoduls 150 angepasst. Gemäß dem hier dargestellten Ausführungsbeispiel weist das Peripheriemodul 150 und damit auch das Dichtelement 170 einen kreisförmigen Querschnitt auf. Die entsprechende Kreiskontur ist senkrecht zur Zeichenebene orientiert.

Wie aus Figur 1 ersichtlich, weist das Dichtelement 170 eine Dichtlippe auf, welche nicht von dem Stützring 168 festgeklemmt wird. Das Dichtelement 170 ist ein bistabiles Dichtelement, welches zwei räumlich voneinander verschiedene Konfigurationen annehmen kann. Die erste Konfiguration wird dabei dadurch erreicht, dass die Dichtlippe gegenüber dem durch den Stützring 168 festgeklemmten Abschnitt des Dichtelements 170 umgestülpt wird, so dass die Dichtlippe an der Außenwand des Stützrings 168 anliegt. Dies kann beispielsweise durch eine einfache manuelle Handhabung erfolgen, bei der die Dichtlippe an zumindest zwei Stellen gleichförmig nach unten geschoben wird. In dem in Figur 1a dargestellten umgestülpten Zustand befindet sich die Dichtlippe an der Außenseite des Stützrings 168, so dass das Peripheriemodul 110 ohne Behinderung durch das Dichtelement entlang einer Steckrichtung 105 in das Befestigungsmodul bzw. die Halterung 150 eingeschoben werden kann. Dabei ist eine ungewollte Reibung zwischen dem Dichtelement 170 und der Haube 114 bzw. dem Rahmenelement 112 nicht zu besorgen. Auch kann eine versehentliche Quetschung des Dichtelements 170 zumindest bei einer einigermaßen sorgsamen Handhabung ausgeschlossen werden.

Zur Fixierung des Peripheriemoduls 110 an dem Befestigungsmodul 150 kann das Peripheriemodul 110 auch in das Befestigungsmodul 150 eingeschraubt werden. Durch das Umstülpen der Dichtlippe wird auch ein entsprechender Einschraubvorgang durch das Dichtelement 170 in keiner Weise behindert.

Es wird darauf hingewiesen, dass auch eine Kombination zwischen einer Verschiebebewegung und einer Schraubbewegung möglich ist, um die beiden Module 110 und 150 aneinander zu befestigen. Ein derartiges Prinzip ist beispielsweise von sog. Bajonettverschlüssen bekannt.

Figur 1b zeigt in einer Querschnittsdarstellung den in Figur 1 dargestellten Alarmgeber 100 im zusammengebauten Zustand. Nach dem Einsetzen des Peripheriemoduls 110 in das Befestigungsmodul 150 wird die Dichtlippe erneut umgestülpt. Am Ende dieser Umstülpbewegung, welche beispielsweise durch einen manuellen Bedieneingriff ausgeführt werden kann, liegt die Dichtlippe an der Außenwand der Haube 114 an. Der entsprechende zweite räumliche Konfigurationszustand des bistabilen Dichtelements 170 ist auf der rechten Seite von Figur 1b dargestellt. Auf der linken Seite von Figur 1b ist das bistabile Dichtelement noch in dem ersten räumlichen Konfigurationszustand dargestellt.

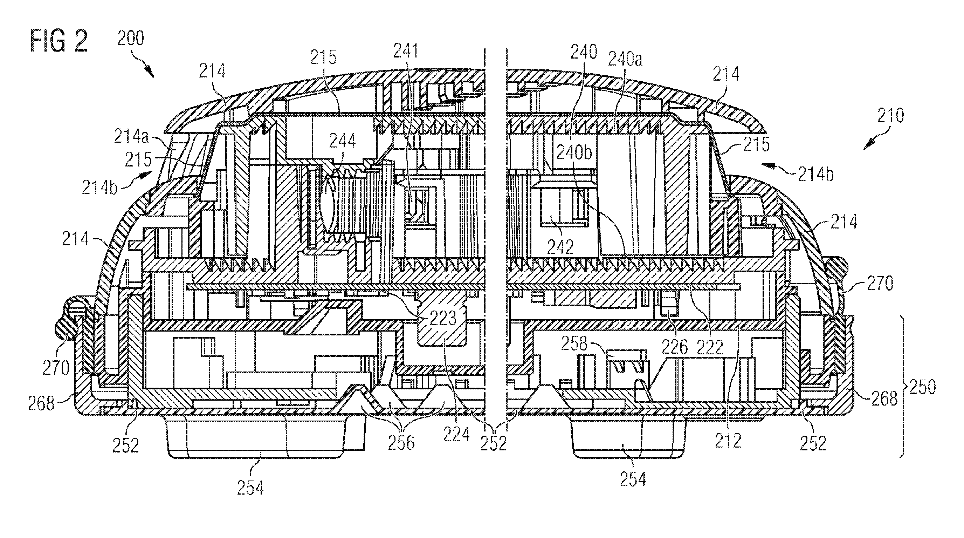

Figur 2 zeigt in einer Querschnittsdarstellung eine als optischen Rauchmelder ausgebildete Peripherieeinheit 200. Die Peripherieeinheit 200 weist ein als Rauchmeldemodul ausgebildetes Peripheriemodul 210 und ein Befestigungsmodul 250 auf, in welches das Peripheriemodul 210 einschiebbar ist. Figur 2 zeigt den Rauchmelder 200 im zusammengebauten Zustand.

Das Rauchmeldemodul 210 weist ein Rahmenelement 212 auf, welches auch als untere Abdeckung bezeichnet werden kann. An dem Rahmenelement 212 ist eine Haube 214 angebracht, welche im oberen Bereich eine die Symmetrieachse des Rauchmelders 200 umlaufende Öffnung 214b aufweist. Mittels mehrerer Verbindungsstege 214a sind die beiden durch die Öffnung 214b voneinander getrennten Abschnitte der Haube 214 miteinander verbunden.

In dem Rauchmeldemodul 210 ist eine optische Streukammer 240 ausgebildet, in welche beispielsweise im Falle eines Brandes Rauch eindringt. An Rauch-Aerosolen gestreutes Messlicht, welches von einer von zwei Lichtsendern 241 und 242 generiert wird, wird mittels eines Lichtempfängers 244 erfasst. Um eine hohe Sensitivität und gleichzeitig eine geringe Wahrscheinlichkeit für Falschalarme zu gewährleisten, sind bei dem hier beschriebenen Rauchmelder 200 die beiden Lichtsender 241 und 242 an unterschiedlichen Positionen angeordnet. Streulicht, welches auf den Lichtempfänger 244 trifft, wurde dann abhängig von dem jeweils aktivierten Lichtsender 241, 242 unter verschiedenen Winkeln gestreut. Von dem Lichtsender 241 ausgesandtes Messlicht, welches nach einer Streuung auf den Lichtempfänger 244 trifft, wird demzufolge unter einem vergleichsweise großen Winkel gestreut. Von dem Lichtsender 242 ausgesandtes Messlicht, welches nach einer Streuung auf den Lichtempfänger 244 trifft, wird demzufolge unter einem vergleichsweise kleinen Winkel an den Rauch-Aerosolen gestreut.

Gemäß dem hier dargestellten Ausführungsbeispiel sind die beiden Lichtsender jeweils mittels einer Leuchtdiode 241, 242 realisiert. Die beiden Leuchtdioden 241, 242 können hinsichtlich ihrer spektralen Verteilung gleiches oder unterschiedliches Messlicht aussenden. Um eine hohe Effizienz bezüglich des Nachweises von Streulicht zu erreichen, ist vor dem Lichtempfänger 244 eine Linse angebracht.

Um ein unerwünschtes Eindringen von Insekten in die optische Streukammer 240 zu verhindern, ist ein Insektengitter 215 vorgesehen, welches die Streukammer 240 von der äußeren Umgebung des Rauchmelders 200 trennt.

Die optische Streukammer 240 wird an der Oberseite von einer Streukammerstruktur 240a und an der Unterseite von einer Streukammerstruktur 240b begrenzt. Die Oberflächen der beiden Streukammerstrukturen 240a, 240b sind derart ausgebildet, dass möglichst kein Licht reflektiert wird. Gemäß dem hier dargestellten Ausführungsbeispiel wird dies durch ein mit einer Vielzahl von kleinen Prismen strukturierten Oberfläche erreicht.

In dem Rauchmeldemodul 210 ist ferner eine Leiterplatte 222 angebracht, an der elektronische Schaltungen beispielsweise zum Ansteuern der beiden Leuchtdioden 241 und 242, zum Betreiben de Lichtempfänger 244 und/oder zum Auswerten der entsprechen Messsignale des Lichtempfänger 244 ausgebildet sind. Diese Schaltungen weisen mehrere elektronische Halbleiterbauelemente 223 und unter anderem einen Kondensator 224 auf. Die Leiterplatte 222 wird mittels eines Raststeges 226 fixiert.

Das Befestigungsmodul 250 weist ein Bodenelement 252 auf, an dem Abstandshalter 254 ausgeformt sind. Ferner sind an dem Bodenelement 252 mehrere Kabeldurchlassöffnungen 256 ausgebildet. Außerdem ist in dem Sockel 250 ein Einrastelement 258 vorgesehen, welches bei einem Anbringen des Rauchmeldemoduls 210 an dem Befestigungsmodul 250 an eine in Figur 2 nicht dargestellte komplementäre Kontur des Rauchmeldemoduls 210 einrastet und somit ein versehentliches Separieren der beiden Module 110 und 150 verhindert.

An dem Befestigungsmodul 250 ist in entsprechender Weise wie bei dem in Figur 1b dargestellten Befestigungsmodul 150 ein Dichtelement 270 angebracht, welches zum Teil von einem Stützring 268 gehalten wird. Der nicht von dem Stützring 268 fixierte Teil des Dichtelements 170 kann mittels einer Umstülpbewegung von einem ersten räumlichen Konfigurationszustand in einen zweiten räumlichen Konfigurationszustand und umgekehrt überführt werden.

Auf der linken Seite von Figur 2 ist das Dichtelement 270 in dem ersten räumlichen Zustand dargestellt. Die Dichtlippe liegt an der Außenwand des Stützrings 268 an und behindert somit weder ein Zusammenfügen noch ein Separieren der beiden Module 210 und 250. Dies gilt sowohl für relative Verschiebebewegungen als auch für relative Verdrehbewegungen der beiden Module 210 und 250.

Auf der rechten Seite von Figur 2 ist das Dichtelement 270 in dem zweiten räumlichen Zustand dargestellt. Die Dichtlippe liegt an der Außenwand der Haube 214 an. Damit ist ein ggf. zwischen den beiden Modulen 210 und 250 vorhandener Zwischenraum gegenüber der Umgebung abgedichtet.

## Patentansprüche

1. Sockel zur Aufnahme eines Peripheriemoduls (110, 210) für ein Gefahrmeldesystem, wobei der Sockel (150, 250) ein Chassis (152, 252) und ein elastisches Dichtelement (170, 270) aufweist, welches an dem Chassis (152, 252) angebracht ist und welches zum Abdichten eines Zwischenraums zwischen dem Sockel (150, 250) und dem aufgenommenen Peripheriemodul (110, 210) gegenüber der Umgebung eingerichtet ist, **dadurch gekennzeichnet, dass** das Dichtelement (170, 270) derart ausgebildet ist, dass es mittels eines Umstülpvorgangs bistabil von einer ersten räumlichen Konfiguration in eine zweite räumliche Konfiguration überführbar ist.

2. Sockel nach Anspruch 1, wobei das Dichtelement (170, 270) derart ausgebildet ist, dass es in der ersten räumlichen Konfiguration einen räumlichen Verbindungsbereich freigibt, so dass das Peripheriemodul (110, 210) ohne Behinderung durch das Dichtelement (170, 270) mit dem Sockel (150, 250) verbindbar und/oder von dem Sockel (150, 250) lösbar ist.

3. Sockel nach einem der vorangehenden Ansprüche, wobei das Dichtelement (170, 270) derart ausgebildet ist, dass es in der zweiten räumlichen Konfiguration den Zwischenraum zwischen dem Sockel (150, 250) und dem Peripheriemodul (110, 210) abdichtet.

4. Sockel nach einem der vorangehenden Ansprüche, wobei das Dichtelement (170, 270) in einer Draufsicht eine runde Form aufweist.

5. Sockel nach einem der vorangehenden Ansprüche, wobei das Dichtelement (170, 270) eine Dichtlippe aufweist, welche in der zweiten räumlichen Konfiguration an einer Außenwand (114, 214) des Peripheriemoduls (110, 210) anliegt.

6. Sockel nach einem der vorangehenden Ansprüche, wobei die beiden bistabilen räumlichen Konfigurationen des Dichtelements (170, 210) durch einen manuellen Handhabungseingriff ineinander überführbar sind.

7. Peripherieeinheit für ein Gefahrmeldesystem, welches einen Sockel (150, 250) nach einem der vorangehenden Ansprüche sowie ein daran aufgenommenes Peripheriemodul (110, 210) aufweist.

8. Peripherieeinheit nach Anspruch 7, wobei das aufgenommene Peripheriemodul (110) zur optischen und/oder akustischen Ausgabe von Alarmmeldungen eingerichtet ist.

9. Peripherieeinheit nach Anspruch 7, wobei die Peripherieeinheit als optischer Rauchmelder (200) ausgebildet ist, der ein Rauchmeldermodul (210) als Peripheriemodul aufweist.

10. Peripherieeinheit nach Anspruch 7, wobei das Peripheriemodul einen Gasdetektor, einen Wärmesensor und/oder einen Bewegungsmelder aufweist.

11. Peripherieeinheit nach Anspruch 7, wobei das aufgenommene Peripheriemodul (110, 210) ein mechanischer Notrufschalter oder Notruftaster ist.

12. Verwendung eines elastischen ringförmigen Dichtelements (170, 270) an einem Chassis (152, 252) eines Sockels (150, 250) zum Abdichten eines Zwischenraums zwischen dem Sockel (150, 250) und einem aufzunehmenden Peripheriemodul (110, 210) gegenüber der Umgebung, wobei das Dichtelement (170, 270) derart ausgebildet ist, dass es mittels eines manuellen Umstülpvorgangs von einer ersten räumlichen Konfiguration in eine zweite räumliche Konfiguration bistabil überführt werden kann, wobei in der ersten räumlichen Konfiguration das Peripheriemodul (110, 210) ohne Behinderung durch das Dichtelement (170, 270) mit dem Sockel (150, 250) verbindbar und/oder von dem Sockel (150, 250) lösbar ist und wobei das Dichtelement (170, 270) in der zweiten räumlichen Konfiguration den Zwischenraum zwischen dem Sockel (150, 250) und dem Peripheriemodul (110, 210) abdichtet.

## Claims

1. Socket for receiving a peripheral module (110, 210) for a hazard alarm system, wherein the socket (150, 250) comprises a chassis (152, 252) and an elastic sealing element (170, 270), which is attached to the chassis (152, 252) and which is set up to seal a space between the socket (150, 250) and the received peripheral module (110, 210) from the environment, **characterised in that** the sealing element (170, 270) is configured in such a manner that it can be changed from a first spatial configuration to a second spatial configuration in a bistable manner by means of an inversion procedure.

2. Socket according to claim 1, wherein the sealing element (170, 270) is configured so that in the first spatial configuration it exposes a spatial connecting region, so that the peripheral module (110, 210) can be connected to the socket (150, 250) and/or detached from the socket (150, 250) without obstruction by the sealing element (170, 270).

3. Socket according to one of the preceding claims, wherein the sealing element (170, 270) is configured so that in the second spatial configuration it seals the space between the socket (150, 250) and the peripheral module (110, 210).

4. Socket according to one of the preceding claims, wherein the sealing element (170, 270) features a round form when viewed from above.

5. Socket according to one of the preceding claims, wherein the sealing element (170, 270) comprises a sealing lip, which is in contact with an outer wall (114, 214) of the peripheral module (110, 210) in the second spatial configuration.

6. Socket according to one of the preceding claims, wherein the two bistable spatial configurations of the sealing element (170, 270) can be changed to one another by a manual handling intervention.

7. Peripheral unit for a hazard alarm system, which has a socket (150, 250) according to one of the preceding claims and a peripheral module (110, 210) received thereon.

8. Peripheral unit according to claim 7, wherein the received peripheral module (110) is set up to output alarm messages optically and/or acoustically.

9. Peripheral unit according to claim 7, wherein the peripheral unit is configured as an optical smoke alarm (200), which comprises a smoke alarm module (210) as a peripheral module.

10. Peripheral unit according to claim 7, wherein the peripheral module comprises a gas detector, heat sensor and/or motion detector.

11. Peripheral unit according to claim 7, wherein the received peripheral module (110, 120) is a mechanical emergency call switch or emergency call button.

12. Use of an elastic annular sealing element (170, 270) on a chassis (152, 252) of a socket (150, 250) for sealing a space between the socket (150, 250) and a peripheral module (110, 210) to be received from the environment, wherein the sealing element (170, 270) is configured in such a manner that it can be changed from a first spatial configuration to a second spatial configuration in a bistable manner by means of a manual inversion procedure, it being possible for the peripheral module (110, 210) to be connected to the socket (150, 250) and/or detached from the socket (150, 250) without obstruction by the sealing element (170, 270) in the first spatial configuration and the sealing element (170, 270) sealing the space between the socket (150, 250) and the peripheral module (110, 210) in the second spatial configuration.

## Revendications

1. Socle destiné à loger un module périphérique (110, 210) pour un système avertisseur de danger, dans lequel le socle (150, 250) présente un châssis (152, 252) et un élément d'étanchéité élastique (170, 270), qui est placé sur le châssis (152, 252) et qui est installé pour rendre étanche un espace intermédiaire entre le socle (150, 250) et le module périphérique (110, 210) incorporé par rapport à l'environnement immédiat, **caractérisé en ce que** l'élément d'étanchéité (170, 270) est configuré de telle sorte qu'il peut passer de manière bistable d'une première configuration dans l'espace à une deuxième configuration dans l'espace au moyen d'un processus de retournement.

2. Socle selon la revendication 1, dans lequel l'élément d'étanchéité (170, 270) est configuré de telle sorte qu'il libère dans la première configuration dans l'espace une zone de raccordement dans l'espace, de sorte que le module périphérique (110, 210) peut être raccordé au socle (150, 250) et/ou être détaché du socle (150, 250) sans entraves de la part de l'élément d'étanchéité (170, 270).

3. Socle selon l'une des revendications précédentes, dans lequel l'élément d'étanchéité (170, 270) est configuré de telle sorte qu'il rend étanche l'espace intermédiaire entre le socle (150, 250) et le module périphérique (110, 210) dans la deuxième configuration dans l'espace.

4. Socle selon l'une des revendications précédentes, dans lequel l'élément d'étanchéité (170, 270) se présente sous une forme ronde lorsqu'il est vu de dessus.

5. Socle selon l'une des revendications précédentes, dans lequel l'élément d'étanchéité (170, 270) présente une lèvre d'étanchéité, qui repose au niveau d'une paroi externe (114, 214) du module périphérique (110, 210) dans la deuxième configuration dans l'espace.

6. Socle selon l'une des revendications précédentes, dans lequel les deux configurations dans l'espace bistables de l'élément d'étanchéité (170, 270) peuvent passer de l'une à l'autre par le biais d'une opération de manipulation manuelle.

7. Unité périphérique pour un système avertisseur de danger, qui présente un socle (150, 250) selon l'une des revendications précédentes ainsi qu'un module périphérique (110, 210) qui y est incorporé.

8. Unité périphérique selon la revendication 7, dans laquelle le module périphérique (110) incorporé est installé pour émettre des messages d'alerte optiques et/ou acoustiques.

9. Unité périphérique selon la revendication 7, dans laquelle l'unité périphérique est configurée en tant que détecteur de fumée optique (200), qui présente un module de détection de fumée (210) en tant que module périphérique.

10. Unité périphérique selon la revendication 7, dans laquelle l'unité périphérique présente un détecteur de gaz, un capteur thermique et/ou un détecteur de mouvement.

11. Unité périphérique selon la revendication 7, dans laquelle le module périphérique (110, 210) incorporé est un commutateur d'urgence ou un bouton d'urgence mécanique.

12. Utilisation d'un élément d'étanchéité annulaire élastique (170, 270) sur un châssis (152, 252) d'un socle (150, 250) pour rendre étanche un espace intermédiaire entre le socle (150, 250) et un module périphérique (110, 210) à loger par rapport à l'environnement immédiat, dans lequel l'élément d'étanchéité (170, 270) est configuré de telle sorte qu'il passe de manière bistable d'une première configuration dans l'espace à une deuxième configuration dans l'espace au moyen d'un processus de retournement manuel, dans lequel le module périphérique (110, 210) dans la première configuration dans l'espace peut être raccordé au socle (150, 250) et/ou peut être détaché du socle (150, 250) sans entraves de la part de l'élément d'étanchéité (170, 270) et dans lequel l'élément d'étanchéité (170, 270) dans la deuxième configuration dans l'espace rend étanche l'espace intermédiaire entre le socle (150, 250) et le module périphérique (110, 210).
